# EUROPÄISCHE PATENTSCHRIFT

(11) **EP 2 325 539 B1**
(45) Veröffentlichungstag und Bekanntmachung des Hinweises auf die Patenterteilung: **13.07.2016**
(21) Anmeldenummer: 10161787.6
(22) Anmeldetag: 03.05.2010
(51) Int. Cl.: F16L 59/135, F16L 3/10, F16L 3/11, F16L 3/24, H02G 3/32, F16L 55/035

(54) **Multifunktionale Rohrschelle**
Multifunctional pipe clamp
Collier multifonctions

(30) Priorität: 13.11.2009 EP 09176003
(43) Veröffentlichungstag der Anmeldung: 25.05.2011
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A1- 0 666 443
- EP-A1- 2 112 413
- EP-A2- 1 530 272
- DE-U- 1 851 413
- FR-A1- 2 520 945
- JP-A- 7 293 754
- US-A- 5 848 770

## Beschreibung

Die Erfindung betrifft eine Rohrschelle.

Rohrschellen dienen der Installation von Leitungen, insbesondere Rohren, welche fest mit einem Baukörper zu verbinden und an einer Montageposition stabil zu halten sind. Dabei sind verschiedene Einsatzkriterien zu beachten. Besonders wichtig sind die mechanische Belastbarkeit insbesondere auch im Brandfall sowie die Handhabbarkeit der Rohrschelle. Diese soll schnell, sicher und komfortabel montierbar sein und die installierte Leitung zuverlässig halten.

Teil 12 der Norm DIN 4102 beschreibt die Anforderungen, Prüfungen und Massnahmen zur Erzielung des Funktionserhaltes von elektrischen Kabelanlagen im Brandfall. Diese Norm ermöglicht somit die Prüfung einer kompletten Kabelanlage unter praxisgerechten Bedingungen. Dazu gehören isolierte Starkstromleitungen, Installationsleitungen für Fernmelde- und Informationsverarbeitungsanlagen sowie Rohre und, die dazu gehörigen Verbindungselemente, Tragevorrichtungen und Halterungen.

Von Fachleuten wird darauf hingewiesen, dass gerade die "Kleinteile", wie brandschutztechnisch geprüfte Dübel und Schrauben, in diesem Zusammenhang eine wichtige Rolle spielen. Denn jede Kabelanlage kann nur so gut sein, wie ihr schwächstes Glied.

In [1], Peter Nause, Brandverhalten von Befestigungssystemen in der Installationstechnik, Materialprüfanstalt für das Bauwesen, Braunschweig, ist ausgeführt, dass bei Prüfungen festgestellt wurde, dass sich selbst metallene Teile von Rohrschellen im Brandfall erheblich deformieren und voneinander lösen können.

Aus [2], EP 1 741 965 A1, ist eine Rohrschelle bekannt, die ein plattenförmiges Montageteil mit einem der Aufnahme einer Leitung dienenden Aufnahmeteil aufweist, welches an zwei Endstücken mittels Schrauben mit Endstücken eines metallenen Abschlusselements verbindbar ist, durch das die installierte Leitung in der Rohrschelle eingeschlossen wird. Das Montageteil wird normalerweise in horizontaler Ausrichtung z.B. mit einer Profilschiene verbunden. Weitere Montagemöglichkeiten, z.B. die Montage dieser Rohrschelle an einer Wand, an der Decke oder am Boden, sind nicht gegeben.

Aus [3], WO 0104529 A1, ist eine Klemmvorrichtung mit verschraubbaren Elementen bekannt, anhand derer Leitungen installiert werden können. Diese Klemmvorrichtung, die für die Installation von Rohren kaum geeignet ist, bietet jedoch keine bequemen Installationsmöglichkeiten sowie keine vorteilhafte Handhabung der zu installierenden Leitungen. In [4], FR 2214343 A5, sind Rohrschellen in elementaren Ausgestaltungen gezeigt.

Aus [5], DE 102006033800 A1, oder [6], CH 644436A5, sind Verbindungsvorrichtungen bekannt, die nur ein metallenes Aufnahmeteil aufweisen, auf dem die Leitung mittels eines Kabelbinders fixiert wird. Typischerweise werden diese Rohrschellen mit nach oben geöffnetem Aufnahmeteil jeweils horizontal montiert. Sofern diese Rohrschellen an der Wand oder der Decke montiert werden, wird die Leitung im Aufnahmeteil nicht gehalten, weshalb sie mit dem Kabelbinder zu fixieren ist, der die Leitung im Brandfall freigibt.

Aus [7], EP 1 808 629 A2, ist eine Klemmvorrichtung bekannt, mittels der Leitungen montiert werden können, ohne dass Schrauben erforderlich sind. Dazu ist ein Montageteil vorgesehen, welches eine U-förmige Ausnehmung aufweist, in die die Leitung eingelegt wird. In der Ausnehmung ist wenigstens eine Verzahnung vorgesehen, in die die Verzahnung eines Keils eingreifen kann. Der Keil wird unter Krafteinwirkung in die Ausnehmung eingeführt, wonach die eingelegte Leitung deformiert wird und die Verzahnungen fest ineinander eingreifen. Diese Klemmvorrichtung weist hinsichtlich der angestrebten Installationsarten wesentliche Nachteile auf. Sofern die Leitung nicht genügend stark deformiert wird, besteht die Gefahr, dass die Verzahnungen ausser Eingriff gelangen. Um den Keil und somit die untere Krafteinwirkung stehende Leitung wieder zu lösen, muss mit einem Werkzeug in die Rohrschelle eingegriffen werden, wodurch Beschädigungen an der Leitung auftreten können. Probeweise Installationen sind daher nur schwer realisierbar. Die Klemmvorrichtung ist für provisorische Installationen von Leitung daher nicht geeignet. Ferner ist die Herstellung des Montageteils mit hohem Aufwand verbunden. Das Montageteil und der Keil werden anhand von teuren Werkzeugen aus Kunststoff gegossen. Es resultieren daher entsprechend teure Produkte, die nur für gezielte Anwendungen geeignet sind. Nach der mehrfachen Montage und Demontage des Keils besteht die Gefahr einer Beschädigung der Verzahnungen. Zudem ist die aus Kunststoff gegossene Klemmvorrichtung für den Brandfall nicht geeignet. Eine weitere aus zwei mit Verzahnungen versehenen Kunststoffteilen bestehende Klemmvorrichtung, die ebenfalls entsprechende Nachteile aufweist, ist aus [8], FR 2880211 A1, bekannt.

Aus [9], EP 2 112 413 A1, ist eine Rohrschelle bekannt, die aus einem vielseitig montierbaren Systemteil besteht, in das eine Leitung eingelegt wird, welche mittels eines Kabelbinders oder eines Niederhalters fixiert wird. Im Brandfall kann eine Deformation des Systemteils und der Kabelbinder resultieren. Ferner wäre es bei dieser Rohrschelle wünschenswert, die Montage der Leitungen weiter zu erleichtern. Insbesondere wäre es wünschenswert, wenn Leitungen und Rohre mit minimalem Aufwand, insbesondere auch probeweise, rasch und sicher montiert werden könnten.

Aus [10], US 3,051,424 A, ist eine Aufhängevorrichtung bekannt, mittels der Rohre mit einem bestimmten Durchmesser montiert werden können. Für Rohre mit unterschiedlichen Durchmessern sowie für andere Montagearten ist diese Aufhängevorrichtung nicht geeignet.

Der vorliegenden Erfindung liegt daher die Aufgabe zugrunde, eine verbesserte Rohrschelle zu schaffen, welche auch im Brandfall ein gesichertes Halten einer installierten Leitung oder eines Rohres gewährleistet.

Insbesondere ist eine einfach aufgebaute und mit minimalem Aufwand herstellbare Rohrschelle zu schaffen, die unter verschiedenen Installationsbedingungen vielseitig montierbar ist, und die eine Installation von Leitungen und Rohren mit unterschiedlichem Durchmesser erlaubt.

Der Installationsvorgang soll rasch und komfortabel durchführbar sein, so dass eine Installation, insbesondere eine provisorische Installation, welche ein sicheres Halten einer Leitung oder eines Rohres gewährleistet, sowie die entsprechende Deinstallation mit nur einem Handgriff möglich sind.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die Rohrschelle, die eine für den Brandfall gesicherte Installation einer Leitung, insbesondere eines Rohres, erlaubt, umfasst ein Montageteil und ein Aufnahmeteil, die einstückig aus einem Metallblech geformt und miteinander verbindbar sind und die dem Halten der installierten Leitung dienen.

Erfindungsgemäss umfasst das U-Profil-förmige Montageteil eine mit wenigstens einem Montageelement versehene Grundplatte sowie zwei Seitenwände. Das Aufnahmeteil weist ein dem Halten der Leitung dienendes und zumindest annähernd V-förmiges Aufnahmesegment sowie beidseitig nach aussen ragende Verbindungselemente auf, die formschlüssig je in eine Öffnung in den Seitenwänden des Montageteils eingreifen, zwischen denen das Aufnahmeteil wahlweise mit dem Aufnahmesegment dem Montageteil zugewandt oder von diesem abgewandt montierbar ist.

Die Fertigung des Montageteils und des Aufnahmeteils einstückig aus einem Metallblech ist mit geringem Aufwand an Material und Arbeit möglich. Durch die Wahl von Metallblech wird ein Ausgangsmaterial verwendet, welches eine hohe Brandfestigkeit aufweist. Vorzugsweise werden Bleche aus rostfreiem Stahl oder auch normale oder hochwarmfeste Stähle verwendet, welche mit einer Schutzschicht, wie Zink versehen sind.

Die Wahl eines U-Profils für das Montageteil ist hinsichtlich eines Brandfalls besonders vorteilhaft. Bei der Verwendung eines U-Profils, vorzugsweise eines U-Profils mit verstärkter Grundplatte, erfolgt anstelle einer Deformation lediglich eine Dehnung der Montageteils, die für den Funktionserhalt der Rohrschelle unkritisch ist. Eine wirksame Verstärkung der Grundplatte, selbst bei dünnem Blech kann durch das Einprägen von Sicken realisiert werden, welche der Grundplatte eine um ein mehrfaches höhere Biegesteifigkeit verleihen.

Die Wahl eines Aufnahmeteils mit einem zumindest annähernd V-förmigen Aufnahmesegment erlaubt es, Leitungen und Rohre mit unterschiedlichem Durchmesser aufzunehmen und stabil zu halten. Die Leitungen und Rohre liegen daher am Aufnahmesegment und nicht am Montageteil an.

Die am Aufnahmeteil beidseitig nach aussen ragenden Verbindungselemente, die formschlüssig je in eine Öffnung in den Seitenwänden des Montageteils eingreifen können, erlauben es, das Aufnahmeteil mit einem Handgriff in das Montageteil einzuhängen. Erfindungsgemäss sind das Montageteil und das Aufnahmeteil derart dimensioniert und ausgestaltet, dass das Aufnahmeteil wahlweise mit dem Aufnahmesegment dem Montageteil zugewandt oder von diesem abgewandt mit dem Montageteil verbunden werden kann. Dadurch eröffnen sich zahlreiche vorteilhafte Möglichkeiten zur Montage der Rohrschelle sowie zur Handhabung einer zu installierenden Leitung.

Das Montageteil wird vorzugsweise mit nur einer Montageschraube montiert, welche z.B. mittels Schraubenmuttern mit der Grundplatte des Montageteils verbunden ist. Die Montageschraube, zum Beispiel eine Gewindestange oder ein Betonanker, kann in der Decke, einer Wand oder im Boden eines Raumes oder an einer beliebigen Seite eines Gegenstandes verankert werden. Die Möglichkeit zum wahlweisen Einsetzen des Aufnahmeteils erlaubt es nun, die Leitung oder das Rohr in einer passenden Weise zu installieren. Sofern das am Boden oder auf einem Gegenstand montierte Montageteil nach oben geöffnet ist, kann das Aufnahmeteil mit dem Aufnahmesegment dem Montageteil zugewandt in das Montageteil eingesetzt werden. Anschliessend kann die Leitung auf das Aufnahmesegment aufgelegt werden, so dass diese vom Aufnahmesegment gestützt wird. Sofern das an der Decke befestigte Montageteil nach unten geöffnet ist, wird das Aufnahmeteil mit dem vom Montageteil abgewandten Aufnahmesegment in das Montageteil eingehängt. In beiden frei wählbaren Montagevarianten kann das Aufnahmeteil oder das Aufnahmeteil zusammen mit der Leitung mit einem Handgriff installiert werden.

Durch die formschlüssige Verbindung zwischen dem Montageteil und dem Aufnahmeteil wird gewährleistet, dass sich das Aufnahmeteil und somit die installierte Leistung auch in einem Brandfall nicht vom Montageteil lösen kann. Die Fixierung der Leitung kann dabei in verschiedener Weise erfolgen. Einerseits sind Kabelbinder einsetzbar, welche die installierte Leitung fest mit dem Aufnahmeteil verbinden. Andererseits kann ein Abschlusselement aus Metall, wie ein U- oder L-förmiger Bügel verwendet werden.

Die Rohrschelle ist daher so flexibel einsetzbar, dass mit einer einzigen Rohrschelle praktisch alle relevanten Installationsanforderungen berücksichtigt werden können.

Erfindungsgemäß weist das Aufnahmeteil zwei an das Aufnahmesegment anschliessende und zumindest annähernd zueinander parallele Seitenstücke auf, die vorzugsweise mit nach aussen gerichteten Haken versehen sind, welche durch die vorzugsweise rechteckigen Öffnungen in den Seitenwänden des Montageteils hindurch greifen. Die beiden Seitenstücke liegen an den Seitenwänden des Montageteils an, nachdem die als Verbindungselemente dienenden Haken in die Öffnungen eingeführt wurden.

In einer weiteren bevorzugten Ausgestaltung sind die beiden Seitenstücke des Aufnahmeteils zusätzlich zu den Haken mit nach aussen gerichteten Rastelementen versehen, die derart angeordnet sind, dass sie an der Seite in die Öffnungen in den Seitenwänden des Montageteils hineinragen, die der Seite der Öffnungen gegenüberliegt an der die Haken anliegen. Durch die Rastelemente wird gewährleistet, dass sich die Haken nicht selbsttätig aus den Öffnungen lösen können. Durch Zurückbiegen der Seitenwände des Montageteils können die Rastelemente gelöst und das Aufnahmeteil aus dem Montageteil ausgehängt werden. Auf diese Weise gelingt eine einfache und vorteilhafte Sicherung der Verbindung, welche noch zusätzlich gesichert werden kann, indem die Seitenstücke des Aufnahmeteils und die Seitenwände des Montageteils, die vorzugsweise plattenförmig ausgestaltet sind und zumindest annähernd parallel aneinander anliegen, z.B. mittels Verschraubung gegeneinander gepresst werden.

Diese zusätzliche Sicherung wird erfindungsgemäss anhand eines der Fixierung der Leitung dienenden Haltebügels realisiert, welcher beidseitig je mit einer Halteschraube versehen ist, durch die jede Seitenwand des Montageteils gegen das entsprechende Seitenstück des Aufnahmeteils und den Haltebügel drückt. Nach der Montage des Haltebügels liegen die Seitenwände und die Seitenstücke aneinander an, weshalb das Rastelement in der Öffnung gehalten bleibt und der Haken nicht gelöst werden kann. Durch die Montage des Haltebügels resultiert zudem eine zweite, zumindest kraftschlüssige Verbindung zwischen dem Montageteil und dem Aufnahmeteil. Eine zusätzliche formschlüssige Verbindung kann erzielt werden, indem die Seitenwände und die Seitenstücke mit ineinander eingreifenden Verformungen versehen werden. Die installierte Rohrschelle ist nach der Installation daher doppelt gegen ein im Brandfall zu vermeidendes Auftrennen geschützt.

Der Haltebügel umfasst ein an der installierten Leitung anliegendes Niederhalteteil und beidseits davon jeweils ein daran anschließendes Seitenelement, welches mit einer Öffnung oder einer Gewindebohrung versehen ist, durch die eine Halteschraube geführt ist, mittels der der Haltebügel zumindest mit dem Aufnahmeteil und/oder dem Montageteil verbunden ist. Durch die Halteschraube, die in die Gewindebohrung im Seitenelement des Haltebügels eingreift, werden die zugehörige Seitenwand des Montageteils und das zugehörige Seitenstück des Aufnahmeteils gegen den Haltebügel gepresst.

Zur Durchführung der Halteschraube weisen die Seitenwände des Montageteils gesonderte Öffnungen auf, die in sich geschlossen sind. In die ersten Öffnungen in den Seitenwänden greifen daher die Haken und die Rastelemente des Aufnahmeteils ein. In den davon gesonderten zweiten Öffnungen sind hingegen die Halteschrauben des Haltebügels derart geführt, dass der Haltebügel entlang den Seitenwänden des Montageteils nach oben und nach unten geführt werden kann. Die als Längsschlitz ausgestaltete zweite Öffnung verläuft nahe der Grundplatte vorzugsweise in einer Kurve, welche es erlaubt, den Haltebügel in einen Parkraum zur Seite zu führen und dort zu fixieren. Sofern der Haltebügel zusätzlich zur Seite gedreht wird, wird der Raum unterhalb der Grundplatte frei gegeben, so dass mit einem Werkzeug auf die Montageschraube zugegriffen werden kann. Nach der Installation der Rohrschelle kann der Haltebügel gelöst, gedreht und gegen die Leitung gefahren werden.

Die Seitenstücke des Aufnahmeteils weisen auf der dem Aufnahmesegment abgewandten Seite je einen nach aussen geöffneten Montageschlitz auf, welcher parallel zur zweiten Öffnung in der zugehörigen Seitenwand des Montageteils verläuft. Die Halteschrauben können daher aus dem Parkraum gefahren und entlang dem zugehörigen Längsschlitz in den Seitenwänden des Montageteils in die nach aussen geöffneten Montageschlitze in den Seitenstücken des Aufnahmeteils gefahren werden.

Sofern das Aufnahmeteil mit dem Aufnahmesegment dem Montageteil zugewandt in das z.B. am Boden montierte Montageteil eingesetzt wird, liegen die Seitenstücke des Aufnahmeteils vorzugsweise frei, so dass der Haltebügel in das Aufnahmeteil eingesetzt werden kann, indem die Halteschrauben in die Montageschlitze eingeführt werden.

Zur schonenden Lagerung der installierten Leitung sind das Aufnahmesegment des Aufnahmeteils und das Niederhalteteil des Haltebügels vorzugsweise mit wenigstens einem elastischen Element versehen.

Nachfolgend wird die Erfindung anhand von Zeichnungen näher erläutert. Dabei zeigt:
- Fig. 1a: eine Rohrschelle 1 in einer ersten Konfiguration, mit einem an einer Decke 71 montierten Montageteil 12, das mit dem Aufnahmeteil 11, derart verbunden ist, dass das V-förmige Aufnahmesegment 111 vom Montageteil 12 abgewandt ist;
- Fig. 1b: die an einer Wand 72 montierte Rohrschelle 1 in der Konfiguration von Figur 1a mit einem Haltebügel 2, der von einer Seitenwand 123 des Montageteils 12 gehalten ist;
- Fig. 1c: die Rohrschelle 1 von Figur 1a in einer zweiten Konfiguration mit dem am Boden 73 montierten und nach oben geöffneten Montageteil 12 und dem darin eingesetzten Aufnahmeteil 11 mit dem dem Montageteil 12 zugewandten Aufnahmesegment 111;
- Fig. 1d: die an einer Wand 72 montierte Rohrschelle 1 in der Konfiguration von Figur 1c;
- Fig. 2a: eine an der Wand 72 montierte Rohrschelle 1 in einer weiteren Ausgestaltung mit einem Haltebügel 2, der mittels einer Halteschraube 81 mit dem Aufnahmeteil 11 und dem Montageteil 12 verbunden ist;
- Fig. 2b: die am Boden 73 montierte Rohrschelle 1 von Figur 2a;
- Fig. 3 a-b: eine erfindungsgemäße Ausgestaltung der Rohrschellen 1 von Figur 1b und 2a mit dem an einer Decke montierten Montageteil 12, in welches das Aufnahmeteil 11 derart eingehängt ist, dass das V-förmige Aufnahmesegment 111 vom Montageteil 12 abgewandt ist;
- Fig. 4 a-b: die Rohrschelle 1 von Figur 3 mit parkiertem Haltebügel 2;
- Fig. 5 a-b: die an einer Wand montierte Rohrschelle 1 von Figur 3, die ein vertikal bzw. horizontal ausgerichtetes Rohr 6 hält;
- Fig. 5c: Verbindungselemente 126, 1121, 1122, mittels denen das Montageteil 12 und das Aufnahmeteil 11 schraubenlos und formschlüssig miteinander verbunden sind;
- Fig. 6 a-b: die Rohrschelle 1 von Figur 3 mit dem am Boden oder auf einen Gegenstand montierten Montageteil 12, in welches das Aufnahmeteil 11 derart eingehängt ist, dass das Aufnahmesegment 111 dem Montageteil 12 zugewandt ist;
- Fig. 7 a-d: das Montageteil 12 und den Haltebügel 2 der Rohrschelle 1 von Figur 3 aus verschiedenen Blickrichtungen;
- Fig. 8 a-c: das Aufnahmeteil 11 der Rohrschelle 1 von Figur 3 aus verschiedenen Blickrichtungen; und
- Fig. 9: das Montageteil 12 und das eingesetzte Aufnahmeteil 11 mit einer zweischaligen Brandschutzisolation.

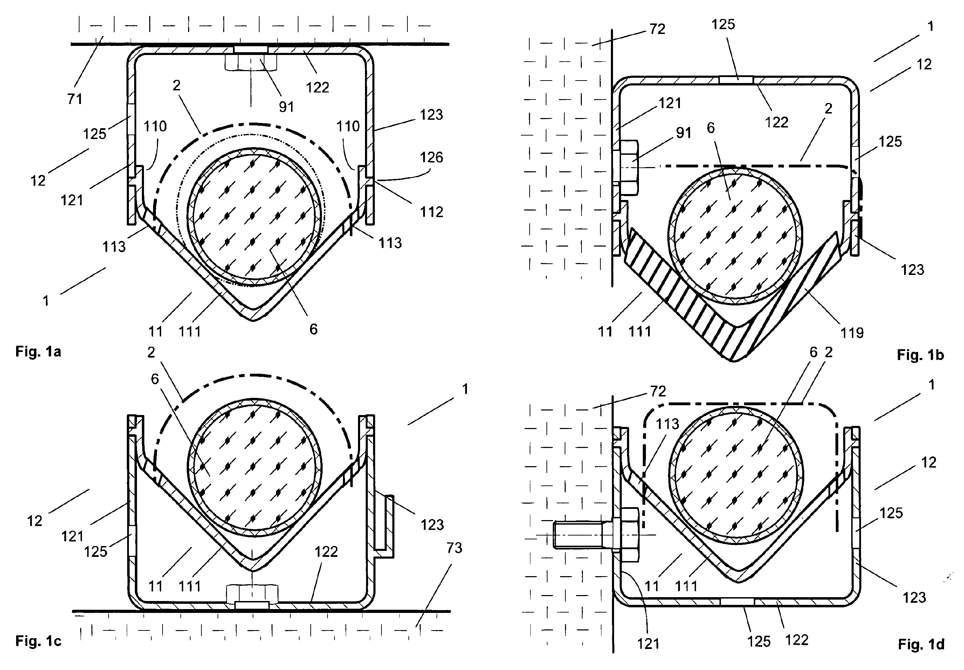

Die Figuren 1a - 1d zeigen eine Rohrschelle 1, welche ein Montageteil 12 und ein Aufnahmeteil 11 umfasst, die einstückig aus einem Metallblech gefertigt und ohne Schrauben formschlüssig miteinander verbindbar und wieder lösbar sind.

Das Montageteil 12 ist zu einem U-Profil geformt und umfasst eine mit einer Montageöffnung 125 versehene Grundplatte 122 sowie zwei beidseitig daran anschliessende Seitenwände 121, 123. Das Aufnahmeteil 11 umfasst ein dem Halten der Leitung 6 dienendes und zumindest annähernd V-förmiges Aufnahmesegment 111 sowie beidseitig nach aussen ragende Verbindungselemente 112, die an zumindest annähernd parallel zueinander verlaufenden Seitenstücken 110 des Aufnahmeteils 11 angeordnet sind. Die Verbindungselemente 112 greifen formschlüssig je in eine Öffnung 126 in den Seitenwänden 121, 123 des Montageteils 12 ein, zwischen denen das Aufnahmeteil 11 wahlweise mit dem Aufnahmesegment 111 dem Montageteil 12 zugewandt oder von diesem abgewandt Aufnahmesegment 111 montierbar ist.

Zur Realisierung dieser formschlüssigen Verbindung zwischen dem Montageteil 12 und dem Aufnahmeteil 11, durch die sichergestellt wird, dass sich das Aufnahmeteil 11 auch im Brandfall und unter Last nicht vom Montageteil 12 löst, sind Verbindungselemente 112, 126 in verschiedenen Ausgestaltungen verwendbar.

Figur 1a zeigt die Rohrschelle 1 in einer ersten Konfiguration, mit dem an einer Decke 71 montierten Montageteil 12, das mit dem Aufnahmeteil 11, derart verbunden ist, dass das V-förmige Aufnahmesegment 111 vom Montageteil 12 abgewandt ist; d.h. das V-förmige Aufnahmesegment 111 weist in der Form eines Pfeils weg vom Montageteil 12. Die installierte Leitung 6 wird vom Aufnahmeteil 11 und vom Montageteil 12 vollständig umschlossen und bleibt auch im Brandfall sicher gehalten. Die Fixierung der installierten Leitung 6 erfolgt anhand eines Kabelbinders 2, der in Öffnungen 113 des Aufnahmeteils 11 eingesetzt ist. Die installierte Leitung 6 kann daher zusammen mit dem Aufnahmeteil 11 in das Montageteil 12 eingesetzt und von diesem wieder gelöst werden. Dies ist besonders vorteilhaft, falls die Leitung 6 provisorisch installiert wird oder z.B. für eine Überprüfung schnell deinstallierbar sein soll.

Figur 1b zeigt die an einer Wand 72 montierte Rohrschelle 1 in der Konfiguration von Figur 1a. Anstelle eines Kabelbinders 32 ist ein L-förmiger Haltebügel 2 vorgesehen, der an einer Seitenwand 123 des Montageteils 12, z.B. in der Öffnung 125, verschiebbar gelagert ist, und gegen die Leitung 6 geführt und z.B. mittels einer Flügelmutter fixiert werden kann. Ferner ist beispielhaft gezeigt, dass auf das Aufnahmesegment 111 des Aufnahmeteils 11 ein elastisches Lagerelement 119 aufgesetzt ist, welches der schonenden Lagerung der Leitung 6 dient.

Figur 1c zeigt die Rohrschelle 1 von Figur 1a in einer zweiten Konfiguration mit dem am Boden 73 oder auf einem Gegenstand montierten und nach oben geöffneten Montageteil 12, in welches das Aufnahmeteil 11 derart eingesetzt ist, dass das Aufnahmesegment 111 dem Montageteil 12 zugewandt ist. In dieser Konfiguration wird die installierte Leitung 6 durch das Aufnahmesegment 111 gestützt, wonach es anhand eines Kabelbinders 2 fixiert werden kann. Diese Konfiguration der Rohrschelle 1 erlaubt eine konventionelle Lagerung der Leitung 6, welche in der Baubranche oft realisiert wird. Da die Leitung 6 von der Rohrschelle 1 gestützt ist, besteht selbst dann keine Gefahr, dass sie sich im Brandfall von der Rohrschelle löst, wenn der Kabelbinder 2 zerstört wird.

Figur 1d zeigt die an einer Wand 72 montierte Rohrschelle 1 in der Konfiguration von Figur 1c. Ferner ist bei dieser beispielhaften Ausführung gezeigt, dass die Leitung 6 von einem U-förmigen Haltebügel 33 gehalten ist, welcher in Öffnungen 113 des Aufnahmeteils 11 eingeführt wurde.

Auch in der Konfiguration, in der das Aufnahmesegment 111 dem Montageteil zugewandt ist, kann die Rohrschelle 1 daher am Boden 73, an einer Wand 72 oder an einem Profilträger installiert werden. Die Rohrschelle 1 kann daher wahlweise an die Anforderungen des Installateurs angepasst und auch an kaum zugänglichen Orten montiert werden.

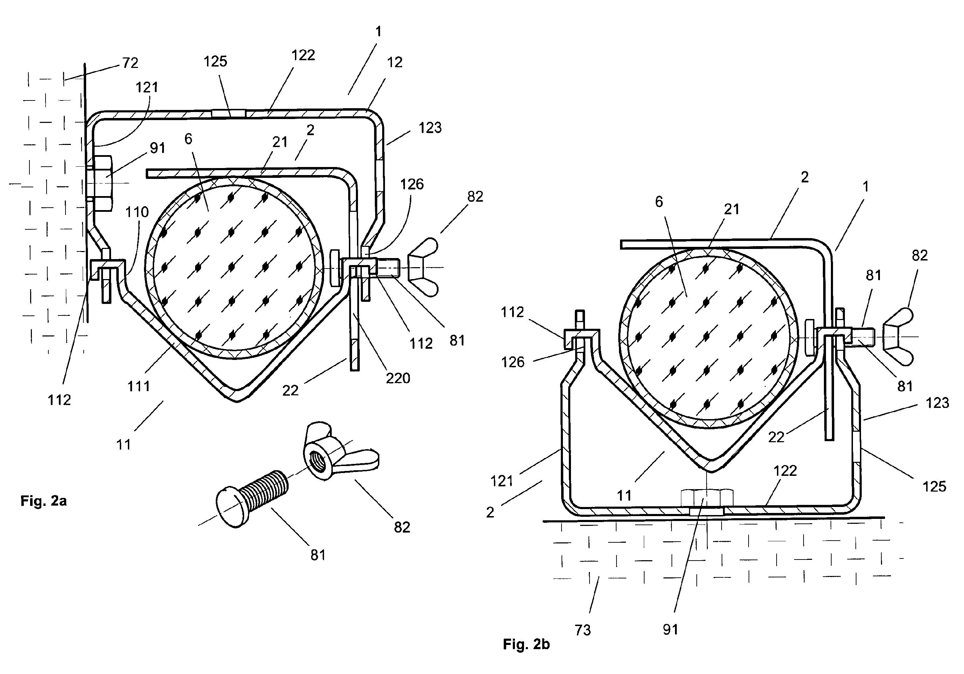

Figur 2a zeigt eine weitere Ausgestaltung der Rohrschelle 1 in der Konfiguration, in der das Aufnahmesegment 111 vom Montageteil 12 abgewandt ist. Bei dieser Ausgestaltung sind die mit den Verbindungselementen 126 versehenen Teile der Seitenwände 121, 123 gegeneinander verschoben, um einen Freiraum zwischen der Wand 72 und der daran anliegenden Seitenwand 121 zu schaffen. Die Verbindungselemente 126 sind als einfache Öffnungen an den unteren Enden der Seitenwände 121, 123 vorgesehen, durch die die hakenförmigen Verbindungselemente 112 des Aufnahmeteils 11 hindurch führbar sind. Das der Wand 72 zugewandte Verbindungselement 112 ragt dabei unbehindert in den Freiraum zwischen der Wand 72 und der Seitenwand 121 hinein.

Figur 2a zeigt ferner einen L-förmigen Haltebügel 2, der einen Längsschlitz 220 aufweist, durch den hindurch eine Halteschraube 81 geführt ist, die ferner durch Öffnungen oder Ausnehmungen im Aufnahmeteil 11 und/oder im Montageteil 12 geführt ist. Der Haltebügel 2 ist zwischen den Endstücken des Aufnahmeteils 11 und des Montageteils 12 hindurch geführt, welche anhand einer auf die Halteschraube 81 aufgesetzte Flügelmutter 82 gegen den Haltebügel 33 gepresst werden. Auf diese Weise werden das Aufnahmeteil 11 und das Montageteil 12, zusätzlich zur Verbindung mit den Verbindungselementen 112, 126, gegenseitig fixiert.

Figur 2b zeigt die am Boden 73 montierte Rohrschelle 1 von Figur 2a in der Konfiguration, in der das Aufnahmesegment 111 dem Montageteil 12 zugewandt ist. Dabei ist ersichtlich, dass die vorteilhafte Verbindung zwischen dem Haltebügel 33, dem Aufnahmeteil 11 und dem Montageteil 12 durch die Halteschraube 81 und die Flügelmutter 82 wie in Figur 2a realisiert wurde.

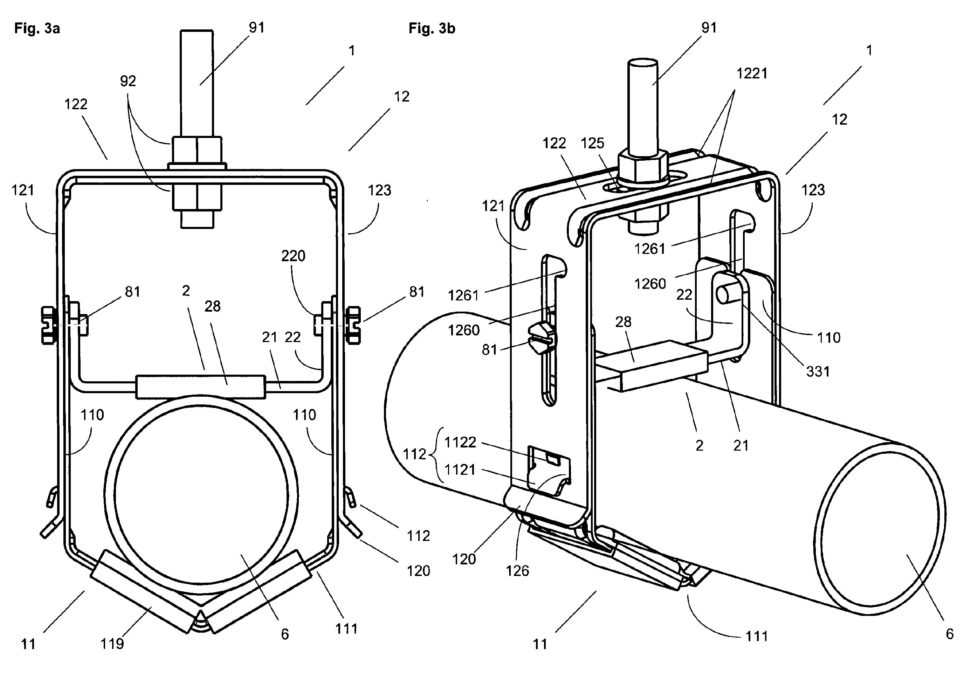

Die Figuren 3a und 3b zeigen eine erfindungsgemässe Rohrschelle 1 in einer weiteren bevorzugten Ausgestaltung, in der wiederum ein Montageteil 12 und ein Aufnahmeteil 11 vorgesehen sind, die wiederum durch Verbindungselemente 112; 1121, 1122 und 126 formschlüssig miteinander verbunden sind. Ferner ist ein Abschlusselement 2 in der Ausgestaltung eines Haltebügels vorgesehen, mittels dem eine installierte Leitung 6 fixiert wird.

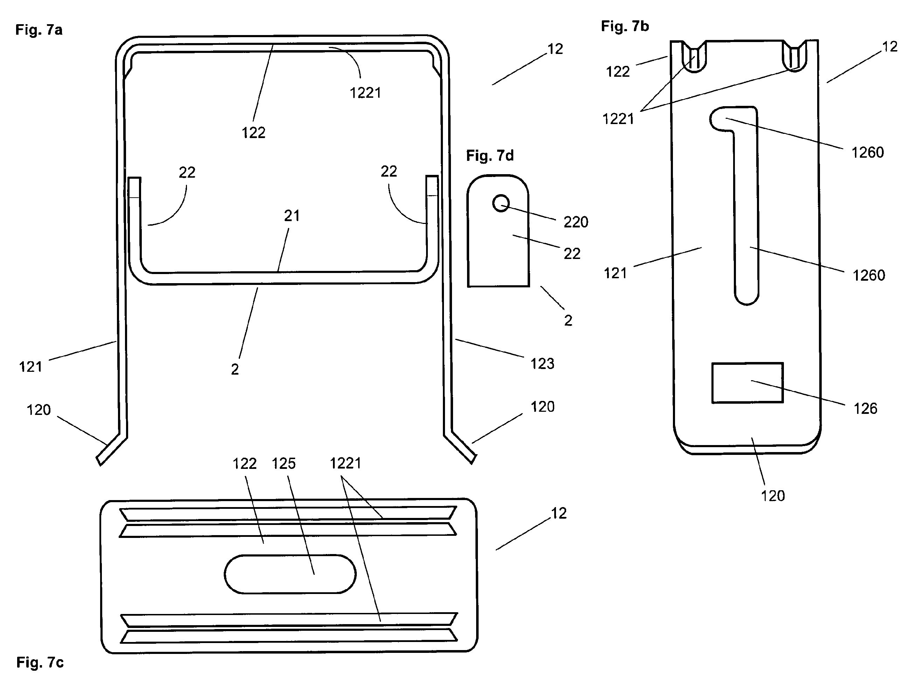

Das U-Profil-förmige Montageteil 12, welches in den Figuren 7a, 7b und 7c vereinzelt gezeigt ist, ist aus einem dünnen Blech gefertigt und weist eine Grundplatte 122 auf, an die auf jeder Seite eine senkrecht dazu ausgerichtete Seitenwand 121 bzw. 123 anschliesst. Die Grundplatte 123 ist mit zwei verstärkenden Sicken 1221 versehen, die von einer zur anderen Seitenwand 121, 123 verlaufen. Zwischen den beiden Sicken 1221 ist die Montageöffnung 125 vorgesehen, in der eine Montageschraube 91 oder ein Gewindeanker anhand von Schraubenmuttern 92 befestigt ist. Durch die Sicken 1221 wird gewährleistet, dass sich die dünne Grundplatte 122 auch unter der Einwirkung von Last auch im Brandfall nicht verbiegen kann. Trotz der geringen Materialdicke weist die Grundplatte daher eine hohe Biegefestigkeit auf. Da die Seitenwände 121, 123 des Montageteils 12 nur auf Zug belastet sind und sich unter Last auch im Brandfall nicht verbiegen, konnte auf die Einformung von Sicken verzichtet werden. Hingegen weisen die Seitenwände 121, 123 an der Unterseite eine rechteckige erste Öffnung 126 und näher zur Grundplatte 122 eine schlitzförmig ausgestaltete zweite Öffnung 1260 auf, welche die Form eines "L" aufweist, dessen Fusselement der Grundplatte 122 zugewandt ist und einen Parkraum 1261 bildet. In der ersten Öffnung 126 sind ein hakenförmiges Verbindungselement 1121 und ein Rastelement 1122 gehalten, die je an einem Seitenstück 110 des Aufnahmeteils 11 angeordnet sind. In der zweiten Öffnung 1260 jeder Seitenwand 121, 123 ist je eine Halteschraube 81 geführt, mittels denen ein Haltebügel 2 zwischen den Seitenwänden 121, 123 gehalten und entlang der zweiten Öffnung 1260, nach unten gegen die installierte Leitung 6 und nach oben bis in den Parkraum 1260 jeder Halteschraube 81 fahrbar ist.

Der in Figur 7a vereinzelt gezeigte Haltebügel 2 weist ein U-Profil auf mit einem Niederhalteteil 21, an das beidseitig um 90° abgewinkelte Seitenelemente 22 anschliessen, die je mit einer Gewindebohrung 220 versehen sind, in die die beiden Halteschraube 81 eingreifen.

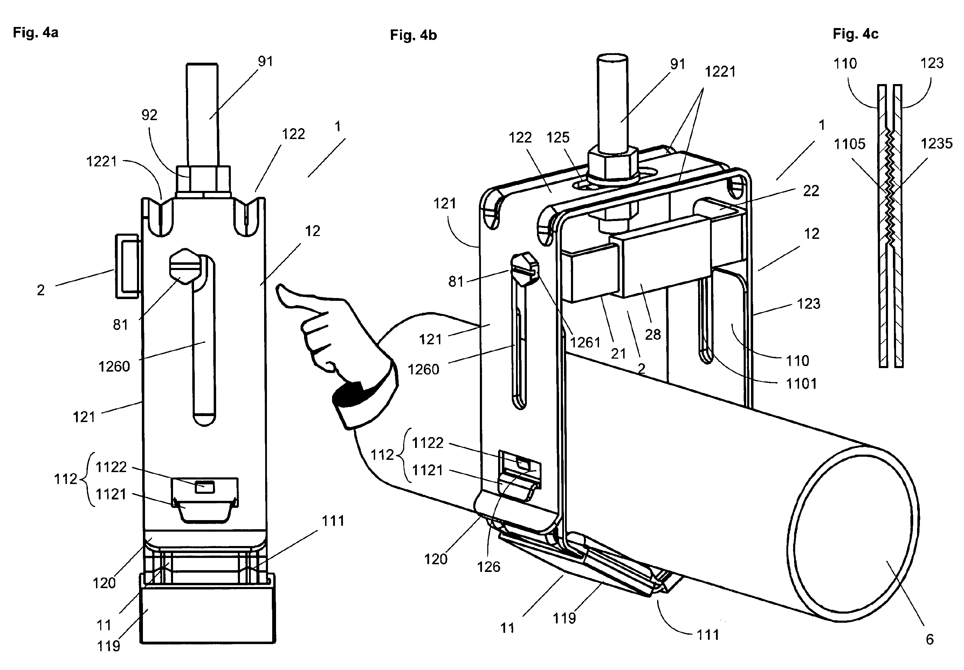

Wie dies in den Figuren 4a und 4b gezeigt ist, erlauben es der Parkraum 1261 der zweiten Öffnung 1260 und die Seitenelemente 22 des Haltebügels 2, das mit einem elastischen Element 28 versehene Niederhalteteil 21 zur Seite zu fahren und zu schwenken, so dass der Raum unterhalb der Grundplatte 122 frei gegeben und der Zugang zur Montageschraube 91 bzw. den damit verbundenen Schraubenmuttern 92 frei gehalten wird. In der in Figur 4a gezeigten Position des Haltebügels 2 ist ferner der weitere Raum zwischen den Seitenwänden 121, 123 frei gehalten, so dass Manipulationen mit dem Aufnahmeteil 11 und der zu installierenden Leitung 6 nicht behindert werden. Vorzugsweise wird die Rohrschelle 1 mit derart vormontiertem bzw. parkiertem Haltebügel 2 geliefert.

An den von der Grundplatte 122 abgewandten Enden weisen die Seitenwände 121, 123 nach aussen ragende kurze Flügelstücke 120 auf, welche es erlauben, dass Aufnahmeteil 11 ungehindert in das Montageteil 12 einzuschieben.

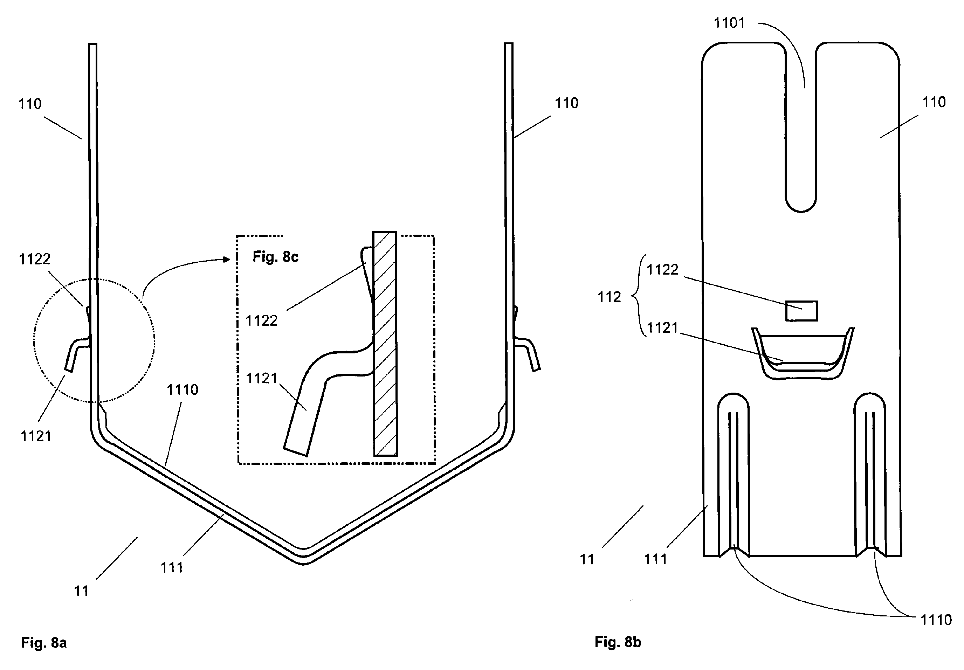

Das in den Figuren 8a, 8b und 8c vereinzelt gezeigte einstückig aus Blech geformte Aufnahmeteil 11 weist ein V-förmiges Aufnahmesegment 111 auf, an dessen beidseitigen Enden Seitenstücke 110 anschliessen, die parallel zu den Seitenwänden 121, 123 des Montageteils 12 verlaufen. Das Aufnahmesegment 111 ist mit zwei Sicken 1110 versehen, welche dem Aufnahmesegment 111 auch für den Brandfall eine hohe Biegefestigkeit verleihen. Die Seitenstücke 110 hingegen sind flache Platten, die an der Oberseite einen gegen die Grundplatte 122 des Montageteils 12 geöffneten Längsschlitz 1101 aufweisen, der parallel zum unteren Teil der zweiten Öffnung 1260 in den Seitenwänden 121, 123 des Montageteils 12 verläuft. Das Aufnahmeteil 11 kann daher von unten in das Montageteil 12 eingeschoben werden, wonach die Halteschrauben 81 des Haltebügels 2 nicht nur in der zweiten Öffnung 1260 der Seitenwände 121,123 des Montageteils 12, sondern auch im Längsschlitz 1101 verschiebbar ist. Wie dies in den Figuren 3a und 3b gezeigt ist, werden die Seitenwände 121, 123 des Montageteils 12 und die auf der Innenseite daran anliegenden Seitenstücke 110 des Aufnahmeteils 11 nach dem Festziehen der Halteschrauben 81 gegen die Seitenelemente 22 des Haltebügels 2 gepresst.

Auf der unteren Seite, nahe dem Aufnahmesegment 111, sind die Seitenstücke 110, wie in Figur 8c im Detail gezeigt, je mit einem nach unten gerichteten Haken 1121 und einem nach oben gerichteten Rastelement 1122 versehen, die in die erste Öffnung 126 in den Seitenwänden 121, 123 des Montageteils 12 eingreifen können. Die Haken 1121 und Rastelemente 1122 sind dabei aus den Seitenwänden 121, 123 ausgeschnitten und nach aussen gedrückt. Beim Einschieben des Aufnahmeteils 11 werden die elastischen Seitenwände 121, 123 des Montageteils 12 auseinander gedrückt, bis die Haken 1121 in die erste Öffnung 126 eingreifen können und die Seitenwände 121, 123 wieder gegeneinander drehen, bis sie an den Rastelementen 1122 anliegen. Wird das Aufnahmeteil 11 nun nach unten gezogen, so können die Rastelemente 1122 ebenfalls in die erste Öffnung 126 eindringen. Durch die Rastelemente 1122 wird nun verhindert, dass das Aufnahmeteil 11 wieder nach oben geschoben werden kann und die Haken 1121 sich aus der ersten Öffnung 126 der Seitenwände 121, 123 lösen können. Durch die Halteschrauben 81, mittels denen der Haltebügel 2 fixiert wird, werden die Seitenwände 121, 123 und die Seitenstücke 110 zusammen gepresst, so dass auch die Rastelemente 1122 sich nicht mehr lösen bzw. ausfahren können. Die Seitenwände 121, 123 und die Seitenstücke 110 sind nach der Montage daher einerseits durch die Verbindungselemente 1121, 1122, 126 formschlüssig und andererseits durch die Halteschrauben 81 zumindest kraftschlüssig miteinander verbunden. Sofern die Seitenwände 121, 123 und die Seitenstücke 110 mit zueinander korrespondierenden Einformungen versehen sind, resultiert eine weitere formschlüssige Verbindung. Die installierte Rohrschelle 1 ist für den Brandfall daher optimal gesichert.

In Figur 4c ist in einer Detaildarstellung gezeigt, dass die Seitenwände 121, 123 und die Seitenstücke 110 vorzugsweise mit zueinander korrespondierenden Verformungen, z.B. Verzahnungen, versehen sind, die ineinander eingreifen können. Beim aneinander Anpressen der derart ausgestalteten Seitenwände 121, 123 und Seitenstücke 110 nach dem Festziehen der Halteschrauben 81 erfolgt nicht nur eine kraftschlüssige, sondern auch eine formschlüssige Verbindung zwischen diesen Teilen. Dadurch wird vermieden, dass die Halteschrauben 81 auf Scherung belastet werden. Dabei kann das Aufnahmeteil 11 noch immer leicht in das Montageteil 12 eingeschoben werden.

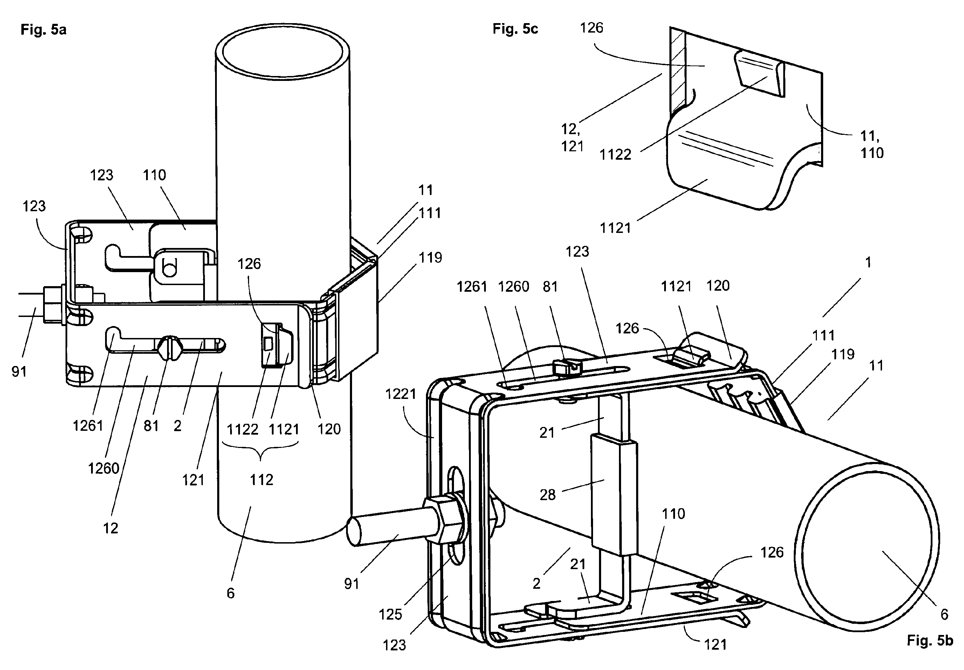

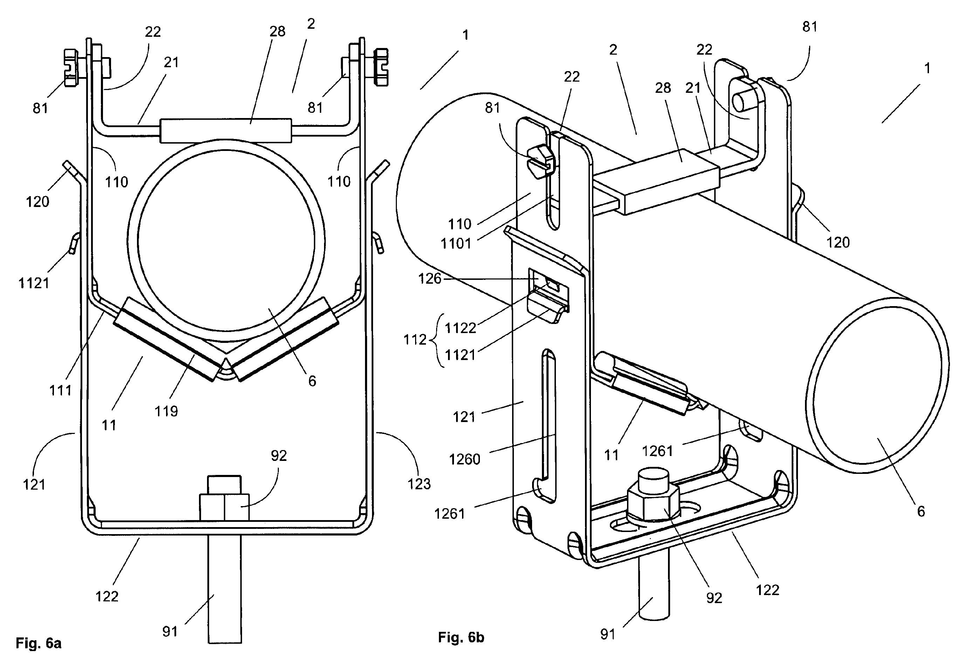

Die Figuren 5a, 5b, 6a und 6c zeigen verschiedene Montagemöglichkeiten der Rohrschelle 1. Die Figuren 5a, und 5b zeigen die an einer Wand montierte Rohrschelle 1 von Figur 3, die ein vertikal bzw. horizontal ausgerichtetes Rohr 6 hält.

Figur 5c zeigt die bereits beschriebenen Verbindungselemente 126, 1121, 1122, mittels denen das Montageteil 12 und das Aufnahmeteil 11 schraubenlos und formschlüssig miteinander verbunden sind, in einer räumlichen Detailansicht.

Die Figuren 6a und 6b zeigen die Rohrschelle 1 von Figur 3 mit dem am Boden oder auf einen Gegenstand montierten Montageteil 12, in welches das Aufnahmeteil 11 derart eingehängt ist, dass das Aufnahmesegment 111 dem Montageteil 12 zugewandt ist. In das Aufnahmesegment 111 ist das Rohr 6 eingelegt, welches mit dem Haltebügel 2 fixiert ist. Der Haltebügel 2 ist mittels der Halteschrauben 81 mit den Seitenstücken 110 des Aufnahmeteils 11 verbunden. Die Halteschrauben 81 sind dabei lediglich in den Schlitzöffnungen 1101 der Seitenstücke 110 geführt, die das Montageteil 12 überragen. Die Verbindungselemente 1121, 1122 sind in gleicher Weise, jedoch um 180° gedreht in den ersten Öffnungen 126 der Seitenwände 121, 123 gehalten.

Die Figuren 7a, 7b, 7c und 7c zeigen das Montageteil 12 und den Haltebügel 2 der Rohrschelle 1 von Figur 3 aus verschiedenen Blickrichtungen

Die Figuren 8a und 8b zeigen das Aufnahmeteil 11 der Rohrschelle 1 von Figur 3 aus verschiedenen Blickrichtungen.

Figur 8c zeigt die bereits beschriebenen Verbindungselemente 126, 1121, 1122, mittels denen das Montageteil 12 und das Aufnahmeteil 11 schraubenlos und formschlüssig miteinander verbunden sind, in einer Detailansicht von der Seite.

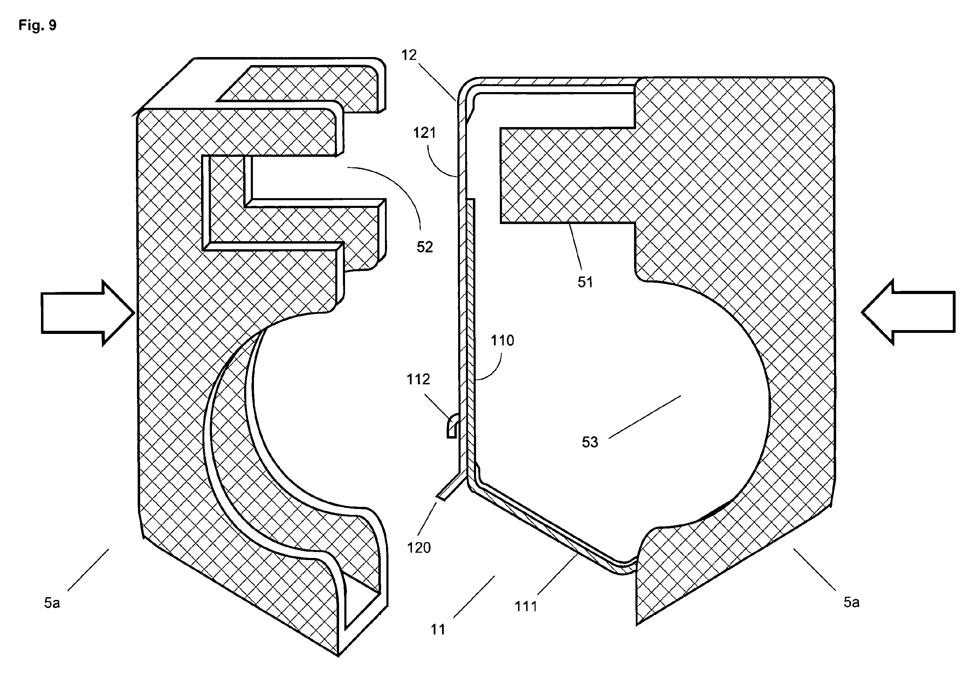

Figur 9 zeigt das Montageteil 12 und das eingesetzte Aufnahmeteil 11 mit einer aus zwei Isolationsschalen 5a, 5b bestehenden Brandschutzisolation. Die zueinander komplementären Isolationsschalen 5a, 5b, die z.B. aus einem Faserverbundwerkstoff oder einem geschäumten Kunststoff, wie Polyethylen, Polystyrol, Neopor, Polyurethan, gefertigt sind, sind derart geformt, dass sie die Metallstruktur der Rohrschelle 1 überdecken. Der freie Raum oberhalb der installierten Leitung 6 wird dabei vorzugsweise genutzt, um die beiden Isolationsschalen 5a, 5b, die entsprechende Kopplungselemente 51, 52 sowie eine Ausnehmung zur Aufnahme der Leitung 6 aufweisen, miteinander zu koppeln. Nach dem Zusammensetzen der beiden Isolationsschalen 5a, 5b, bei dem die Kopplungselemente 51, 52 ineinander eingreifen, werden die Isolationsschalen 5a, 5b, von den Flügelelementen 120 gehalten. Ferner können weitere nach aussen gerichtete Halteelemente vorgesehen sein, die in das Material der Isolationsschalen 5a, 5b eingreifen oder einschneiden.

### Literaturverzeichnis

- [1]: Peter Nause, Brandverhalten von Befestigungssystemen in der Installationstechnik, Materialprüfanstalt für das Bauwesen, Braunschweig (undatiert)
- [2]: EP 1 741 965 A1
- [3]: WO 01/04529 A1
- [4]: FR2214343A5
- [5]: DE102006033800A1
- [6]: CH 644436 A5
- [7]: EP 1 808 629 A2
- [8]: FR 2880211 A1
- [9]: EP 2 112 413 A1
- [10]: US 3,051,424 A

## Patentansprüche

1. Rohrschelle (1) für eine für den Brandfall gesicherte Installation einer Leitung (6), insbesondere eines Rohres, mit einem einstückigen, aus einem Metallblech zu einem U-Profil geformten Montageteil (12), das eine mit wenigstens einem Montageelement (125; 91) versehene Grundplatte (122) sowie zwei mit schlitzförmigen Öffnungen (1260) versehene Seitenwände (121, 123) umfasst, und einem einstückigen, aus einem Metallblech zu einem Profil geformten Aufnahmeteil (11) mit einem zumindest annährend V-förmigen Aufnahmesegment (111), das dem Halten der Leitung (6) dient, und mit einem Haltebügel (2), wobei die Leitung (6) mittels des Haltebügels (2) fixierbar ist, der ein an der Leitung (6) anliegendes Niederhalteteil (21) und beidseits daran anschliessende Seitenelemente (22) mit je einer Öffnung (22) aufweist, durch die sowie durch die schlitzförmigen Öffnungen (1260) hindurch Halteschrauben (81) führbar sind, wobei das Aufnahmesegment (111) beidseits mit annährend zueinander parallelen Seitenstücken (110) versehen ist, die auf der davon abgewandten Seite je einen nach aussen geöffneten, der Durchführung der Halteschrauben (81) dienenden Montageschlitz (1101) aufweisen, welcher parallel zur schlitzförmigen Öffnung (1260) in der Seitenwand (121; 123) des Montageteils (12) verläuft, und an denen je wenigstens ein nach aussen ragendes Verbindungselement (112, 1221, 1222) vorgesehen ist, welches formschlüssig in eine weitere Öffnung (126) in der zugehörigen Seitenwand (121, 123) des Montageteils (12) eingreift , wobei zwischen den Seitenwänden (121, 123) das Aufnahmeteil (11) wahlweise mit dem Aufnahmesegment (111) dem Montageteil (12) zugewandt oder von diesem abgewandt montierbar ist.

2. Rohrschelle (1) nach Anspruch 1, **dadurch gekennzeichnet, dass** das Aufnahmeteil (11) zwei an das Aufnahmesegment (111) anschliessende und zumindest annähernd zueinander parallele Seitenstücke (110) aufweist, die mit nach aussen gerichteten Haken (112, 1121) versehen sind, welche durch die vorzugsweise rechteckigen Öffnungen (126) in den Seitenwänden (121, 123) des Montageteils (12) hindurch greifen.

3. Rohrschelle (1) nach Anspruch 2, **dadurch gekennzeichnet, dass** die beiden Seitenstücke (110) des Aufnahmeteils (11) zusätzlich zu den Haken (1121) mit nach aussen gerichteten Rastelementen (1122) versehen sind, die derart angeordnet sind, dass sie an der Seite in die Öffnungen (126) in den Seitenwänden (121, 123) des Montageteils (12) hineinragen, die der Seite der Öffnungen (126) gegenüberliegt an der die Haken (1121) anliegen.

4. Rohrschelle (1) nach Anspruch 2 oder 3, **dadurch gekennzeichnet, dass** die Seitenstücke (110) des Aufnahmeteils (11) und die Seitenwände (121, 123) des Montageteils (12) plattenförmig ausgestaltet sind und zumindest annähernd parallel aneinander anliegen.

5. Rohrschelle (1) nach einem der Ansprüche 1-4, **dadurch gekennzeichnet, dass** die Grundplatte (122) des Montageteils (12) mit Verstärkungselementen 1221, wie Sicken versehen ist, die von einer Seitenwand (121) zur anderen Seitenwand (123) des Montageteils (12) verlaufen.

6. Rohrschelle (1) nach einem der Ansprüche 1-5, **dadurch gekennzeichnet, dass** der Haltebügel (2) mittels der Halteschraube (81) mit den Seitenstücken (110) des Aufnahmeteils (11) verbunden ist, wenn das Aufnahmesegment (111) gegen die Grundplatte (122) gerichtet ist, und dass der Haltebügel (2) mit den Seitenwänden (121, 123) des Montageteils (12) und den Seitenstücken (110) des Aufnahmeteils (11) verbunden ist, wenn das Aufnahmesegment (111) vom Montageteil (12) abgewandt ist.

7. Rohrschelle (1) nach Anspruch 6, **dadurch gekennzeichnet, dass** der Haltebügel (2) U- förmig ausgestaltet ist.

8. Rohrschelle (1) nach Anspruch 6 oder 7, **dadurch gekennzeichnet, dass** die schlitzartige Öffnung (1260) in der Seitenwand (121; 123) des Montageteils (12) nahe der Grundplatte (122) vorzugsweise um 90° die Richtung ändert und in einen Parkierraum (1261) einmündet.

9. Rohrschelle (1) nach Anspruch 8, **dadurch gekennzeichnet, dass** die Seitenstücke (110) des Aufnahmeteils (11) frei liegen und in den Montageschlitzen (1101) die Halteschrauben (81) des Haltebügels (2) halten, wenn das Aufnahmesegment (111) dem Montageteil (12) zugewandt ist.

10. Rohrschelle (1) nach einem der Ansprüche 1-9 , **dadurch gekennzeichnet, dass** an der Grundplatte (122) des Montageteils (12) eine der Aufnahme einer Montageschraube (91) dienende Montageöffnung (125) vorgesehen ist.

11. Rohrschelle (1) nach einem der Ansprüche 1-10 , **dadurch gekennzeichnet, dass** das Aufnahmesegment (11) des Aufnahmeteils (11) und/oder das Niederhalteteil (21) des Haltebügels (2) mit wenigstens einem elastischen Element (28 bzw. 119) versehen ist bzw. sind.

12. Rohrschelle (1) nach einem der Ansprüche 1-11 , **dadurch gekennzeichnet, dass** die Seitenstücke (110) des Aufnahmeteils (11) und die Seitenwände (121, 123) des Montageteils (12) mit zueinander korrespondierenden Verformungen, wie Verzahnungen, versehen sind.

13. Rohrschelle (1) nach einem der Ansprüche 1-12, **dadurch gekennzeichnet, dass** das Aufnahmesegment (111) des Aufnahmeteils (11) mit wenigstens einer Sicke (1110) versehen ist, die vorzugsweise von einem zum anderen Seitenstück (110) verläuft.

14. Rohrschelle (1) nach einem der Ansprüche 1-13 , **dadurch gekennzeichnet, dass** eine Brandschutzisolation mit zwei zueinander komplementären Isolationsschalen (5a, 5b) vorgesehen ist, welche an der Oberseite ineinander eingreifenden Kopplungselemente (51, 52) und auf der Unterseite eine der Aufnahme der installierten Leitung (6) dienende Ausnehmung (53) aufweisen.

## Claims

1. Pipe clamp (1) for the installation of a conduit (6), particularly a tube, that is secured for the case of fire, with a mounting member (12) that is formed in one piece from a metal sheet to a U-profile that comprises a base plate (122) having at least one mounting element (125; 91) as well as two sidewalls (121, 123) having slot-shaped openings (1260), and with a receiving member (11) that is formed in one piece from a metal sheet to a profile having an at least approximately V-shaped receiving segment (111) that serves for holding the conduit and with a holding bracket (2), wherein the conduit (6) can be fixed by means of the holding bracket (2), which comprises a down holding member (21), which abuts the conduit (6) and which comprises on both sides thereto adjoining side elements (22) having an opening (22) each, through which as well as through the slot-shaped openings (1260) holding screws (81) are guidable, **wherein** the receiving segment (111) is provided on both sides with side pieces (110), which are aligned approximately in parallel to one another, which comprise each on the side averted thereto a mounting slot (1101), that is open towards the outside, that serves for receiving the holding screw (81), that extends in parallel to the slot-shaped opening (1260) in the sidewall (121; 123) of the mounting member (12), and on which each a connecting element (112, 1221, 1222) is provided, that extends to the outside and that engages in a form locking manner in a further opening (126) in the related sidewall (121, 123) of the mounting member (12), **wherein the** receiving member (11) can be mounted between the sidewalls (121, 123) selectively with the receiving segment (111) facing the mounting member (12) or averted thereto.

2. Pipe clamp (1) according to claim 1, **characterised in that** the receiving member (11) comprises two side pieces (110) that are adjoining the receiving segment (111) and that are aligned at least approximately in parallel to one another and that are provided with hooks (112, 1121), which extend towards the outside and which reach through the preferably rectangular openings (126) in the sidewalls (121, 123) of the mounting member (12).

3. Pipe clamp (1) according to claim 2, **characterised in that** the two side pieces (110) of the receiving member (11) are provided, in addition to the hooks (1121), with catch elements (1122) that extend towards the outside and that are arranged in such a way that they extend at the side into the openings (126) of the sidewalls (121, 123) of the mounting member (12), which is opposite to the side of the openings (126) on which the hooks (1121) abut.

4. Pipe clamp (1) according to claim 2 or 3, **characterised in that** the side pieces (110) of the receiving member (11) and the sidewalls (121, 123) of the mounting member (12) are plate-shaped and abut at least approximately in parallel at one another.

5. Pipe clamp (1) according to one of the claims 1-4, **characterised in that** the base plate (122) of the mounting member (12) is provided with enforcing elements 1221, such as reinforcing fins, which extend from one sidewall (121) to the other sidewall (123) of the mounting member (12).

6. Pipe clamp (1) according to one of the claims 1-5, **characterised in that** the holding bracket (2) is connected by means of the holding screw (81) to the side pieces (110) of the receiving member (11), when the receiving segment (111) is facing the base plate (122), and that the holding bracket (2) is connected with the sidewalls (121, 123) of the mounting member (12) and the side pieces (110) of the receiving member (11), when the receiving segment (111) is averted from the mounting member (12).

7. Pipe clamp (1) according to claim 6, **characterised in that** the holding bracket (2) is provided with a U-shape.

8. Pipe clamp (1) according to claim 6 or 7, **characterised in that** the slot-shaped opening (1260) in the sidewall (121; 123) of the mounting member (12) changes direction close to the base plate (122) preferably by 90° and enters into a parking space (1261).

9. Pipe clamp (1) according to claim 8, **characterised in that**, when the receiving segment (111) is facing the mounting member (12), the side pieces (110) of the receiving member (11) lie free and hold the holding screws (81) of the holding bracket (2) within the mounting slots (1101).

10. Pipe clamp (1) according to one of the claims 1-9, **characterised in that** a mounting opening (125) is provided at the base plate (122) of the mounting member (12), which serves for receiving a mounting screw (91).

11. Pipe clamp (1) according to one of the claims 1-10, **characterised in that** the receiving segment (11) of the receiving member (11) and/or the down holding member (21) of the holding bracket (2) is or are provided with at least one elastic element (28 or 119).

12. Pipe clamp (1) according to one of the claims 1-11, **characterised in that** the side pieces (110) of the receiving member (11) and the sidewalls (121, 123) of the mounting member (12) are provided with deformations, such as toothing, that correspond to one another.

13. Pipe clamp (1) according to one of the claims 1-12, **characterised in that** the receiving segment (111) of the receiving member (11) is provided with at least one enforcing fin (1110), which preferably extends from one side piece (110) to the other.

14. Pipe clamp (1) according to one of the claims 1 13, **characterised in that** a fire protection insulation with two insulation shells (5a, 5b) that correspond to one another is provided, which on the upper side comprise coupling elements (51, 52) engaging into one another and on the lower side a recess (53) serving for receiving the installed conduit (6).

## Revendications

1. Collier de fixation de tuyau (1) pour une installation protégée dans le cas d'incendie d'un conduit (6), en particulier d'un tuyau, avec une pièce de montage (12), réalisée en forme de U et formée en une pièce d'une feuille métallique, ladite pièce de montage (12) comprenant une plaque de base (122) muni d'au moins un élément de montage (125; 91) et deux parois latérales (121, 123) avec des ouvertures en forme de fente (1260), et une pièce de logement (11), formée en forme de profile en une pièce d'une feuille métallique, avec un segment de logement (111), qui est au moins à peu près réalisé en forme de V et qui sert à tenir le conduit, et avec un étrier de fixation (2) destiné à fixer le conduit (6) et qui présente un serre-flan (21) s'appliquant sur le conduit (6) et des éléments latéraux (22) se joignant des deux côtés au serre-flan (21) avec une ouverture (22) chacune, les vis de fixation (81) pouvant pénétrer à travers cette ouverture (22) ainsi qu'à travers l'ouverture en forme de fente (1260), le segment de logement (111) présentant des deux côtés des partie latérales (110) à peu près parallèles, qui présentent chacune, du côté opposé, une fente de montage (1101) destiné à traverser la vis de fixation (81), ladite fente de montage (1101) étant parallèle à l'ouverture en forme de fente (1260) dans la paroi latérale (121; 123) de la pièce de montage (12) et présentant chacune un élément d'accouplement (112, 1221, 1222) orienté vers l'extérieur, ledit élément d'accouplement (112, 1221, 1222) pénétrant à ajustement de forme dans une autre ouverture (126) dans la paroi latérale (121, 123) de la pièce de montage (12) correspondante, la pièce de logement (11) pouvant être logée entre les parois latérales (121, 123) soit avec le segment de logement (111) tourné vers la pièce de montage (12) soit tourné dans le sens opposé de ladite pièce de montage (12).

2. Collier de fixation de tuyau (1) selon la revendication 1, **caractérisé en ce que** la pièce de logement (11) présente deux parties latérales (110), qui se joignent au segment de logement (111) et qui sont au moins à peu près orientés de manière parallèle, et qui présentent des crochets (112, 1121) orientés vers l'extérieur, qui passent à travers les ouvertures (126), qui sont de préférence rectangulaires, dans les parois latérales (121, 123) de la pièce de montages (12).

3. Collier de fixation de tuyau (1) selon la revendication 2, **caractérisé en ce que** les deux parties latérales (110) de la pièce de logement (11) présentent, en plus des crochets (1121), des éléments d'encliquetage (1122) orientés vers l'extérieur, qui sont placés de manière à ce qu'ils pénètrent dans l'ouverture (126) dans les parois latérales (121, 123) de la pièce de montage (12) du côté opposé du côté de l'ouverture (126) où les crochets (1121) s'appuyent.

4. Collier de fixation de tuyau (1) selon la revendication 2 ou 3, **caractérisé en ce que** la partie latérale (110) de la pièce de logement (11) et la paroi latérale (121, 123) de la pièce de montage (12) sont réalisées en forme de plaques et s'appliquent à peu près parallèles l'une contre l'autre.

5. Collier de fixation de tuyau (1) selon l'une des revendications 1-4, **caractérisé en ce que** la plaque de base (122) de la pièce de montage (12) présente des éléments de renfort (1221), comme des moulures, qui vont d'une paroi latérale (121) à l'autre paroi latérale (123) de la pièce de montage (12).

6. Collier de fixation de tuyau (1) selon l'une des revendications 1-5, **caractérisé en ce que** l'étrier de fixation (2) est connecté avec les parties latérales (110) de la pièce de logement (11) à l'aide de la vis de fixation (81), si le segment de logement (111) est orienté vers la plaque de base (122), et que l'étrier de fixation (2) est connecté avec les parois latérales (121, 123) de la pièce de montage (12) et les parties latérales (110) de la pièce de logement (11), si le segment de logement (111) est orienté en direction opposé de la pièce de montage (12).

7. Collier de fixation de tuyau (1) selon la revendication 6, **caractérisé en ce que** l'étrier de fixation (2) est réalisé en forme de U.

8. Collier de fixation de tuyau (1) selon la revendication 6 ou 7, **caractérisé en ce que** l'ouverture en forme de fente (1260) dans la paroi latérale (121; 123) de la pièce de montage (12) change de direction, de préférence de 90°, proche de la plaque de base (122), et débouche dans un espace de logement (1261).

9. Collier de fixation de tuyau (1) selon la revendication 8, **caractérisé en ce que** les parties latérales (110) de la pièce de logement (11) sont exposées et tiennent les vis de fixation (81) de l'étrier de fixation (2) dans les fentes de montage (1101), si le segment de logement (111) est orienté vers la pièce de montage (12).

10. Collier de fixation de tuyau (1) selon l'une des revendications 1-9, **caractérisé en ce que** la plaque de base (122) de la pièce de montage (12) présente une ouverture de montage (125) destinée à loger une vis de montage (91).

11. Collier de fixation de tuyau (1) selon l'une des revendications 1-10, **caractérisé en ce que** le segment de logement (111) de la pièce de logement (11) et/ou le serre-flan (21) de l'étrier de fixation (2) présente resp. présentent au moins un élément élastique (28 resp. 119).

12. Collier de fixation de tuyau (1) selon l'une des revendications 1-11, **caractérisé en ce que** la partie latérale (110) de la pièce de logements (11) et les parois latérales (121, 123) de la pièce de montage (12) sont munis d'éléments de déformations mutuellement correspondant, comme des dentures.

13. Collier de fixation de tuyau (1) selon l'une des revendications 1-12, **caractérisé en ce que** le segment de logement (111) de la pièce de logements (11) présente au moins une moulure (1110), qui va de préférence d'une partie latérale (110) à l'autre.

14. Collier de fixation de tuyau (1) selon l'une des revendications 1-13, **caractérisé en ce qu'**une isolation d'incendie est prévue avec deux coquilles isolantes (5a, 5b) mutuellement complémentaires, qui présentent sur la face supérieure des éléments d'accouplement (51, 52), qui peuvent s'emmancher mutuellement, et sur la face inférieure un évidement (53), destiné à recevoir le conduit (6) installé.
